# EUROPÄISCHE PATENTANMELDUNG

(11) **EP 0 849 915 A1**
(43) Veröffentlichungstag der Anmeldung: **24.06.1998**
(21) Anmeldenummer: 97440138.2
(22) Anmeldetag: 19.12.1997
(51) Int. Cl.: H04L 12/437

(54) **Übertragungsnetz zum bidirektionalen Transport von Daten**

(30) Priorität: 21.12.1996 DE 19653823
(71) Anmelder: ALCATEL ALSTHOM COMPAGNIE GENERALE D'ELECTRICITE, 75008 Paris (FR)
(72) Erfinder: Grammel, Gert, 73066 Uhingen (DE)
(74) Vertreter: Schätzle, Albin, Dipl.-Phys.

(57) **Zusammenfassung**

Ein Übertragungsnetz (10) zum bidirektionalen Transport von Daten auf Übertragungsleitungen zu mehreren Netzknoten (12a, 12b, 12c) mit einer Zentralstation (11), die ein Mastersignal empfängt und weiterleitet, ist dadurch gekennzeichnet, daß die Netzknoten (12a, 12b, 12c) in einer Ringstruktur durch die Übertragungsleitungen miteinander verbunden sind, wobei der Ring in der Zentralstation (11) geschlossen ist, und daß jeder Netzknoten eine Master-Slave-Einheit mit einem Mastersignalausgang und einem Slavesignalausgang, einen Detektor und zwei Schalter umfaßt, wobei der Detektor über eine erste Übertragungsleitung empfangene Mastersignale überwacht und bei Erkennen eines Fehlersignals den ersten Schalter betätigt, welcher eine weitere Übertragungsleitung, die parallel zur ersten verläuft und den Netzknoten mit demselben Partner verbindet, wie die erste Übertragungsleitung, mit dem Masterausgang der Master-Slave-Einheit verbindet, und den zweiten Schalter betätigt, welcher den Slaveausgang der Master-Slave-Einheit mit einer zweiten, zum zugehörigen Netzknoten laufenden Übertragungsleitung verbindet, die den Netzknoten mit einem anderen Partner verbindet als die erste Übertragungsleitung. Damit steht bei Auftreten einer Störung in einer Übertragungsleitung unmittelbar eine Ersatzschaltung zur Aufrechterhaltung des bidirektionalen Datentransportes bereit.

## Beschreibung

Die Erfindung betrifft ein Übertragungsnetz zum bidirektionalen Transport von Daten auf Übertragungsleitungen zu mehreren Netzknoten mit einer Zentralstation, die ein Mastersignal empfängt und auf mindestens eine Übertragungsleitung weiterleitet, wobei auf der mindestens einen Übertragungsleitung auch Slavesignale von mindestens einem Netzknoten zur Zentralstation zurückgeleitet werden können.

Ein solches Datenübertragungsnetz ist beispielsweise bekannt aus einem Zeitschriftenartikel von D. Rupp und U. Timmermann mit dem Titel "Das SlSA-Transportnetz" in der Zeitschrift "telekom praxis", Ausgabe 7/1995, Seiten 41 bis 54.

Das bekannte SlSA-Überwachungsnetz weist eine einfache Baumstruktur auf, bei der ausgehend von einer Zentrale mehrere Netzknoten hierarchisch mit Datensignalen versorgt und abgefragt werden. Dabei sendet die Zentrale ein Mastersignal aus, auf das der adressierte Netzknoten antwortet. Jeder Netzknoten wirkt auf der Empfangsseite als Slave und auf der Sendeseite als Master. Durch diese einfache Struktur wird eine asynchrone Datenverbindung zur Überwachung von Anschlüssen von einer Zentrale aus aufgebaut, bei der eine Abfrage jederzeit ohne großen Aufwand möglich ist. Typischerweise wird in einem SlSA-Netz lediglich eine Datenübertragungsgeschwindigkeit von mindestens 64 kBit/sec benötigt.

Im Gegensatz dazu sind beispielsweise SDH-Netze, die dem Transport für große Mengen von Daten über weite räumliche Entfernungen dienen, erheblich aufwendiger. Derartige SDHNetzstrukturen sind beispielsweise beschrieben in den Artikeln von R. Wiechers mit dem Titel "Synchrone Digitale Hierarchie - Ein neuer Standard verändert die Welt" in der Zeitschrift "Funkschau", Ausgabe 14/1991, Seiten 56 bis 62 sowie Ausgabe 15/1991, Seiten 53 bis 57.

In diesem Artikel ist insbesondere auch im Zusammenhang mit dem SDH-Transportnetz eine Ringstruktur bestehend aus bidirektionalen Leitungen beschrieben, in der jeder Knotenpunkt mit jedem anderen im Ring auf zwei unterschiedlichen Wegen kommuniziert. Allerdings sind beim SDH-System keine MasterSlave-Beziehungen festgelegt, sondern die Leitungsstruktur, insbesondere der Ring, wird in beiden Richtungen gleichberechtigt benutzt. Aus diesem Grunde ist eine erheblich aufwendigere Taktsynchronisation erforderlich, die technisch wesentlich schwieriger zu realisieren ist als das oben beschriebene asynchrone SlSA-System. Beim SDH-Datentransport-system ist eine Abfrage von einem Netzknoten zum anderen nur in bestimmten Takten möglich, während bei dem Pollingprozeß in einem SISA-Überwachungssystem mit asynchroner Datenverbindung eine Abfrage jederzeit abgesetzt, empfangen und beantwortet werden kann.

Die oben genannten Systeme unterscheiden sich aber auch schon in der Dimension der transportierten Datenmengen um viele Größenordnungen. Während, wie oben erwähnt, das SlSAÜberwachungsnetz mit einem Datenstrom von 64 kBit/sec auskommt, benötigt das SDH-Transportnetz eine Übertragungsrate von mindestens 140 MBit/sec. Bereits daraus wird deutlich, daß zwischen den beiden Systemen Welten liegen und die Anwendungsgebiete völlig unterschiedlich sind.

Die vorliegende Erfindung beschäftigt sich ausschließlich mit einer Weiterbildung eines unaufwendigen Überwachungsnetzes nach Art des SlSA-Systems, das mit relativ wenigen Datenkanälen auskommt. Nachteilig bei dem bekannten SlSA-System ist jedoch, daß bei einem Bruch einer Übertragungsleitung keine Ersatzschaltung zur Verfügung steht, so daß zunächst die Kommunikation bis zur Behebung der Störung unterbrochen ist.

Aufgrund der festen Master-Slave-Beziehungen zwischen den einzelnen Netzknoten ist bei einem SISA-System der bekannten Art ausschließlich die in dem oben zitierten Artikel beschriebene Baumstruktur mit streng hierarchischem Aufbau möglich. Andere Strukturen mit wechselnder Hierarchie-Beziehung sind mit diesem Netzknoten nicht realisierbar. Solche Strukturen werden in der Übertragungstechnik jedoch in zunehmendem Maße eingesetzt, z. B. Ringstrukturen.

Aufgabe der vorliegenden Erfindung ist es demgegenüber, ein Übertragungsnetz mit asynchroner Datenverbindung und den eingangs beschriebenen Merkmalen ohne größeren technischen Mehraufwand dahingehend zu verbessern, daß bei Auftreten einer Störung in einer Übertragungsleitung unmittelbar eine Ersatzschaltung zur Aufrechterhaltung des bidirektionalen Datentransportes bereitsteht, um die Zeit bis zur sachgerechten Behebung des aufgetretenen Fehlers ohne Funktionsausfall überbrücken zu können, wobei auch kein Zeitverlust und keine Unterbrechung der Datenübertragung durch eine Neukonfiguration der Master-Slave-Einstellungen in den Netzknoten erforderlich sein soll.

Erfindungsgemäß wird diese Aufgabe auf ebenso überraschend einfache wie wirkungsvolle Art und Weise dadurch gelöst, daß die Netzknoten in einer Ringstruktur durch Übertragungsleitungen miteinander verbunden sind, wobei der Ring in der Zentralstation geschlossen ist, und daß jeder Netzknoten eine Master-Slave-Einheit, mindestens einen Detektor und mindestens einen ersten und einen zweiten Schalter umfaßt, wobei die Master-Slave-Einheit zwei Ports aufweist, von denen der eine Mastersignale empfangen und Slavesignale senden und der andere Slavesignale empfangen und Mastersignale senden kann, wobei der Detektor vom zugehörigen Netzknoten über eine erste Übertragungsleitung empfangene Mastersignale überwacht und bei Unterschreiten einer vorgegebenen minimalen Mastersignalhöhe oder bei Überschreiten einer vorgegebenen maximalen Mastersignal-freien Zeitdauer den ersten Schalter betätigt, welcher entweder die überwachte erste Übertragungsleitung oder eine weitere Übertragungsleitung, die parallel zur ersten Übertragungsleitung verläuft und den Netzknoten mit demselben Partner verbindet, wie die erste Übertragungsleitung, mit dem Masterausgang der Master-Slave-Einheit verbindet, und wobei der Detektor den zweiten Schalter betätigt, welcher den Slaveausgang der Master-Slave-Einheit mit einer zweiten, zum zugehörigen Netzknoten laufenden Übertragungsleitung verbindet, die den Netzknoten mit einem anderen Partner verbindet als die erste Übertragungsleitung.

In jedem Netzknoten bleibt also beim erfindungsgemäßen Übertragungsnetz die Master-Slave-Einstellung auch bei Auftreten eines Fehlers unverändert, wobei nach außen hin jedoch die Funktionen ohne weiteres unmittelbar umgekehrt werden können. Der Detektor sowie der erste und zweite Schalter müssen nicht notwendigerweise als Hardware-Bauteile vorliegen, sondern können auch in Form einer geeigneten Software realisiert sein.

Selbst wenn die Netzknoten in der Ringstruktur untereinander und mit der Zentralstation nur durch jeweils eine Übertragungsleitung mit einem Partner und durch eine zweite Übertragungsleitung mit einem weiteren Partner verbunden sind, kann durch Umkehrung der Datenstromrichtung in einem Teil des Rings auch derjenige Netzknoten mit Daten von der Zentralstation erreicht werden, dessen Mastersignalverbindung zur Zentralstation aufgrund des aufgetretenen Fehlers in der normalen Datenübertragungsrichtung unterbrochen ist. Bei dieser Umschaltung ist keine Umkonfiguration der ursprünglichen Master-Slave-Einstellung erforderlich, sondern lediglich eine interne Umschaltung in dem betroffenen Netzknoten. Die Master-Slave-Einstellung in der Master-Slave-Einheit, die beispielsweise von einem SlSA-Konzentrator gebildet sein kann, bleibt dabei immer gleich.

Ein weiterer Vorteil der erfindungsgemäßen Struktur besteht darin, daß durch die Einführung einer Ringstruktur anstelle der vom SlSA-System bekannten Baumstruktur die Übertragungswege zwischen der Zentralstation und bestimmten Netzknoten verringert werden können, wenn die entsprechenden Daten in der jeweils kürzesten Richtung auf dem Ring zu dem betreffenden Netzknoten geschickt werden. Weiterhin besteht die Möglichkeit, durch Zusammenfügen mehrerer Ringstrukturen das Netz weiter zu vermaschen, wodurch eine höhere Verfügbarkeit erreicht wird und die Anzahl möglicher Ersatzwege beim Auftreten von Fehlern sich erheblich steigern läßt.

Besonders bevorzugt ist eine Ausführungsform des erfindungsgemäßen Übertragungsnetzes, bei der in mindestens einem Netzknoten ein weiterer Detektor vorgesehen ist, der die zweite Übertragungsleitung auf eingehende Mastersignale überwacht, und der anstelle des ersten Detektors bei einem Ausbleiben der Mastersignale den zweiten Schalter betätigt. Dadurch kann nach Beheben eines eingetretenen Fehlers die erfolgte Umwegschaltung automatisch wieder in den optimierten Normalmodus zurückgeschaltet werden.

Vorteilhaft ist auch eine Ausführungsform, die sich dadurch auszeichnet, daß bei mindestens einem Netzknoten der erste Schalter permanent mit dem Slaveausgang der Master-SlaveEinheit verbunden ist und im Falle einer Störungsdetektion nicht mit dem Masterausgang der Master-Slave-Einheit verbunden wird. Dadurch kann die Anzahl der Hierarchieebenen, die zum Management des Rings erforderlich sind, bedeutend verringert werden, weil die entsprechend modifizierten Netzknoten keine Masterfunktion ausüben, sondern lediglich als Slave wirken.

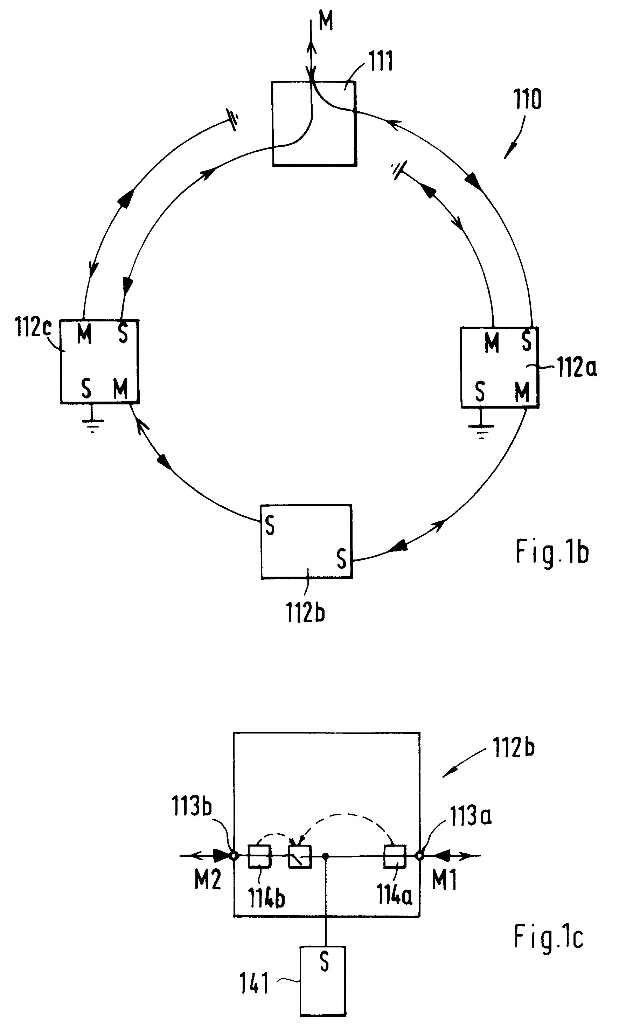

Bei einer weiteren vorteilhaften Ausführungsform des erfindungsgemäßen Ubertragungsnetzes verteilt die Zentralstation das eingespeiste Mastersignal permanent auf zwei in unterschiedliche Richtungen abgehende Übertragungsleitungen. Damit wird der Schaltungsaufwand in der Zentrale minimiert. Ein speziell beschalteter Netzknoten (siehe Fig. 1b) ist zusätzlich notwendig, um im fehlerfreien Fall die Mastersignale voneinander zu trennen.

Bei einer weiteren vorteilhaften Ausführungsform des erfindungsgemäßen Übertragungsnetzes ist in der Zentralstation ein Schalter vorgesehen, der bei Meldung einer Systemstörung das in die Zentralstation eingespeiste Mastersignal auf eine weitere, von der Zentralstation abgehende Übertragungsleitung legt. Durch Eröffnung eines weiteren Signalpfades im Fehlerfall kann der Betrieb des Systems wiederhergestellt werden.

Bei einer Weiterbildung dieser Ausführungsform ist in der Zentralstation ein Detektor vorgesehen, der eine von mindestens einem Netzknoten ankommende Übertragungsleitung auf das Vorliegen von Mastersignalen überwacht und im Falle einer detektierten Störung den Schalter in der Zentralstation betätigt. Auf diese Weise wird ein autarkes Fehlermanagement einschließlich automatischer Rückschaltung in den Grundzustand nach Beheben des Fehlers ermöglicht.

Vorteilhaft ist auch eine Ausführungsform des erfindungsgemäßen Übertragungsnetzes, bei der ein weiterer Halbring vorgesehen ist, der mittels einer weiteren, von der Zentralstation ausgehenden Übertragungsleitung einen oder mehrere weitere Netzknoten mit Mastersignalen beschickt, wobei der letzte Netzknoten im Halbring mittels einer Übertragungsleitung entweder mit einem Netzknoten in der Ringstruktur oder mit der Zentralstation verbunden ist. Auf diese Weise wird eine Vermaschung der Ringstruktur des Übertragungsnetzes sowie eine Optimierung der Datenübertragungswege von der Zentralstation zu den einzelnen Netzknoten erreicht. Außerdem steht im Störungsfalle ein weiterer Ersatzpfad für Mastersignale, die in "umgekehrter" Richtung laufen, zur Verfügung.

Ganz besonders bevorzugt ist eine Ausführungsform, die dadurch gekennzeichnet ist, daß in der Ringstruktur die Zentralstation mit den benachbarten Netzknoten und die Netzknoten untereinander jeweils durch zwei parallele Übertragungsleitungen miteinander verbunden sind, wobei auf der einen der parallelen Übertragungsleitungen jeweils bevorzugt Mastersignale und auf der anderen der beiden parallelen Übertragungsleitungen jeweils bevorzugt Slavesignale transportiert werden. Dadurch wird die Redundanz des Systems erheblich erhöht, es ergibt sich eine wesentlich verbesserte Leistungsfähigkeit, weil die Datensignale auf den Übertragungswegen eine geringere Dämpfung erfahren und durch die Ausbildung einer Vorzugsrichtung die Datenwege optimiert werden können.

Eine "Kaskadierung" des erfindungsgemäßen Übertragungsnetzes ist dadurch möglich, daß von mindestens einem Netzknoten mittels einer Übertragungsleitung eine weitere Zentralstation mit Mastersignalen versorgt wird, wobei die weitere Zentralstation den Ausgangspunkt für eine weitere Ringstruktur von Übertragungsleitungen und weiteren Netzknoten bildet.

Vorzugsweise ist bei zumindest einem der Netzknoten die vorgebbare minimale Mastersignalhöhe und/oder die vorgebbare maximale Mastersignal-freie Zeitdauer, nach der mindestens einer der Detektoren anspricht, einstellbar.

In den Rahmen der vorliegenden Erfindung fällt auch ein Netzknoten zum Einbau in ein Übertragungsnetz zum bidirektionalen Transport von Daten, in den mindestens zwei Datenübertragungsleitungen münden, die den Netzknoten entweder mit einer Zentralstation oder einem weiteren Netzknoten verbinden. Erfindungsgemäß zeichnet sich der Netzknoten dadurch aus, daß er eine Master-Slave-Einheit umfaßt, die zwei Ports aufweist, von denen der eine Mastersignale empfangen und Slave-Signale senden und der andere Slave-Signale empfangen und Mastersignale senden kann, und daß der Netzknoten mindestens einen Detektor und mindestens einen ersten und einen zweiten Schalter umfaßt, wobei der Detektor über eine erste Übertragungsleitung empfangene Mastersignale überwacht und bei Unterschreiten einer vorgegebenen minimalen Mastersignalhöhe oder bei Überschreiten einer vorgegebenen maximalen Mastersignal-freien Zeitdauer den ersten Schalter betätigt, welcher die vom Detektor überwachte erste Übertragungsleitung oder eine weitere Übertragungsleitung, die parallel zur ersten Übertragungsleitung verläuft und den Netzknoten mit demselben Partner verbindet, wie die erste Übertragungsleitung, mit dem Masterausgang der Master-Slave-Einheit verbindet, und wobei der Detektor den zweiten Schalter betätigt, welcher den Slaveausgang der Master-Slave-Einheit mit der zweiten zum Netzknoten laufenden Übertragungsleitung verbindet, die den Netzknoten mit einem anderen Partner verbindet als die erste Übertragungsleitung. Derartige Netzknoten werden bevorzugt in erfindungsgemäße Übertragungsnetze der oben beschriebenen Art eingebaut. Die Master-Slave-Einheit kann, wie oben bereits erwähnt, beispielsweise ein SISA-Konzentrator sein. Außerdem können, wie ebenfalls oben schon ausgeführt, die Funktionen des Detektors, des ersten Schalters und/oder des zweiten Schalters jeweils statt durch HardwareBauteile in Form einer geeigneten Software, beispielsweise als Ergänzung zur SISA-Software im Netzknoten realisiert sein.

Bei einer vorteilhaften Ausführungsform des erfindungsgemäßen Netzknotens ist ein weiterer Detektor vorgesehen, der die zweite Übertragungsleitung auf eingehende Mastersignale überwacht, und der anstelle des ersten Detektors bei einem Ausbleiben der Mastersignale den zweiten Schalter betätigt. Auch dieser zweite Detektor kann softwaremäßig realisiert sein.

Bei einer besonders einfachen Ausführungsform des erfindungsgemäßen Netzknotens kann der erste Schalter permanent mit dem Slaveausgang der Master-Slave-Einheit verbunden sein. Im Falle einer Störungsdetektion wird der erste Schalter dann nicht mit dem Masterausgang der Master-Slave-Einheit verbunden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1a: eine schematische Darstellung einer Ausführungsform des erfindungsgemäßen Übertragungsnetzes mit doppelter Ringstruktur und parallelen Übertragungsleitungen;
- Fig. 1b: eine Mischform der Übertragungsnetze nach Fig 1a und Fig. 2;
- Fig. 1c: eine spezielle Ausführungsform eines Netzknotens für das Übertragungsnetz nach Fig. 1b;
- Fig. 2: ein erfindungsgemäßes Übertragungsnetz mit zusätzlichem Halbring;
- Fig. 3: ein kaskadiertes Übertragungsnetz mit weiterer Zentralstation, die von einem Netzknoten mit Mastersignalen versorgt wird;
- Fig. 4: eine einfache Ausführungsform eines erfindungsgemäßen Netzknotens mit einem Detektor und zwei Schaltern;
- Fig. 5: eine verbesserte Ausführungsform des erfindungsgemäßen Netzknotens mit zwei Detektoren;
- Fig. 6: einen erfindungsgemäßen Netzknoten für eine Doppelringstruktur, wie sie in Fig. 1a gezeigt ist;
- Fig. 7: einen erfindungsgemäßen Netzknoten wie in Fig. 6, wobei jedoch der zweite Schalter permanent mit dem Slaveausgang der Mastereinheit verbunden ist;
- Fig. 8: eine einfache Variante einer Zentralstation für ein erfindungsgemäßes Übertragungsnetz;
- Fig. 9: eine Zentralstation wie in Fig. 8, jedoch mit einem weiteren Mastersignalausgang zur Versorgung eines Übertragungsnetzes mit Halbring, wie beispielsweise in Fig. 2 gezeigt; und
- Fig. 10: eine Zentralstation für ein erfindungsgemäßes Übertragungsnetz mit doppelter Ringstruktur, wie in Fig. 1a gezeigt.

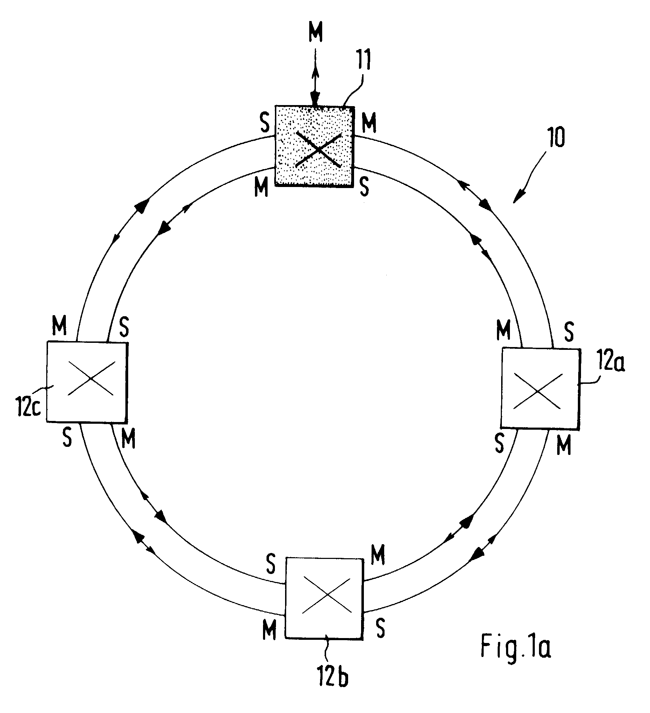

Das in Fig. 1a schematisch dargestellte Übertragungsnetz 10 zum bidirektionalen Transport von Daten auf Übertragungsleitungen weist eine Zentralstation 11 auf, die in der Regel mit einem Mastersignal beschickt wird. Im folgenden sind auf den dargestellten Übertragungsleitungen die Mastersignale mit vollen Pfeilen und die in entgegengesetzte Richtung laufenden Slavesignale mit hakenförmigen Pfeilchen gekennzeichnet.

In einer ringförmigen Struktur verbinden die Übertragungsleitungen die Zentralstation 11 mit verschiedenen Netzknoten 12a, 12b, 12c, wobei der Ring in der Zentralstation 11 geschlossen ist. Die Masterausgänge einer jeden Einheit im Ringnetz sind mit "M" und die Slaveausgänge mit "S" gekennzeichnet.

Eine Besonderheit des Übertragungsnetzes 10 in Fig. 1a besteht darin, daß in der Ringstruktur die Zentralstation 11 mit dem benachbarten Netzknoten 12a, 12c und die Netzknoten 12a, 12b, 12c untereinander jeweils durch zwei parallele Übertragungsleitungen miteinander verbunden sind. Auf der äußeren Übertragungsleitung werden im gezeigten Beispiel vorzugsweise Mastersignale von der Zentralstation über die Netzknoten 12a, 12b, 12c und wieder zurück transportiert, während auf der inneren Übertragungsleitung bevorzugt Slavesignale von der Zentralstation 11 abgehend durch das Ringnetz geschickt werden.

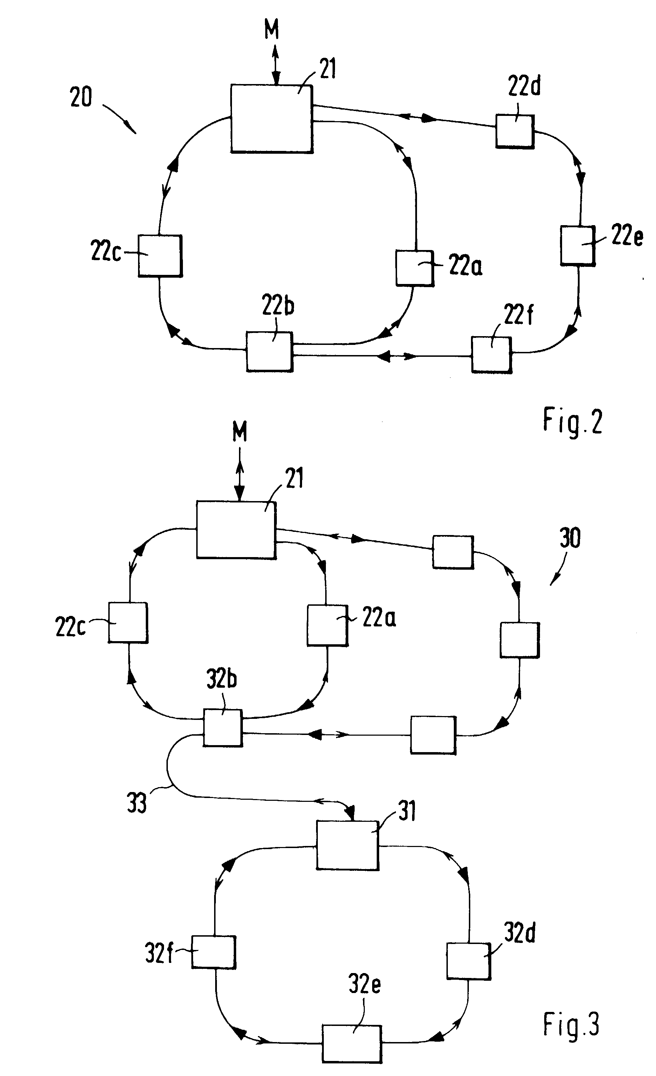

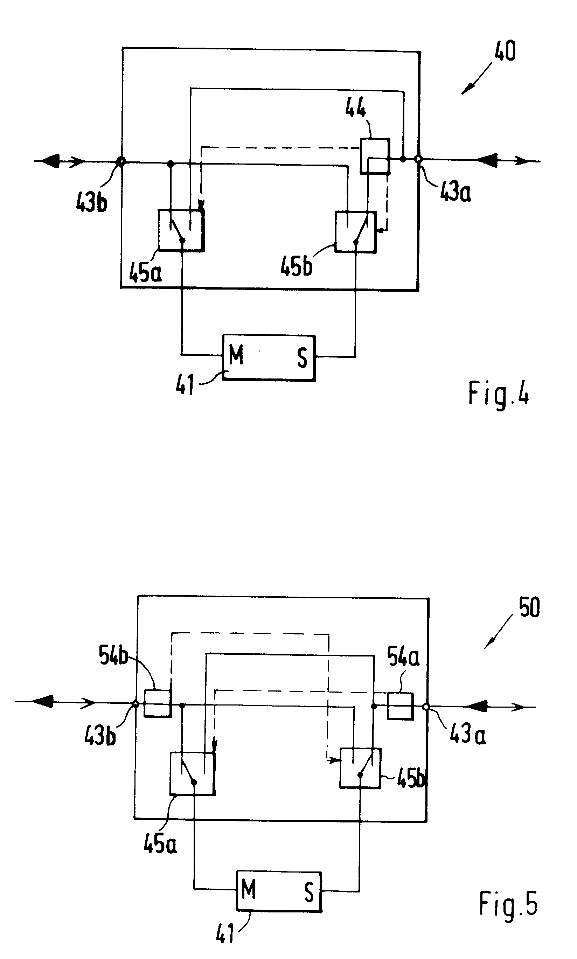

Übertragungsnetze, bei denen verschiedene Netzpartner statt mit den in Fig. 1a gezeigten parallelen Übertragungsleitungen jeweils nur durch einfache Übertragungsleitungen untereinander verbunden sind, sind in den Figuren 2 und 3 schematisch dargestellt. Dabei weist das Übertragungsnetz 20 in Fig. 2 als Besonderheit einen weiteren Halbring auf, der parallel zu dem die Zentralstation 21 und die Netzknoten 22a und 22b verbindenden inneren Halbring verläuft und die Zentralstation 21 mit den Netzknoten 22d, 22e, 22f und 22b verbindet.

Das Übertragungsnetz 30 in Fig. 3 unterscheidet sich von dem Übertragungsnetz 20 dadurch, daß von dem Netzknoten 32b mittels einer Übertragungsleitung 33 eine weitere Zentralstation 31, die ihrerseits Ausgangspunkt für eine weitere Ringstruktur von Übertragungsleitungen und weiteren Netzknoten 32d, 32e, 32f bildet, mit Mastersignalen versorgt wird.

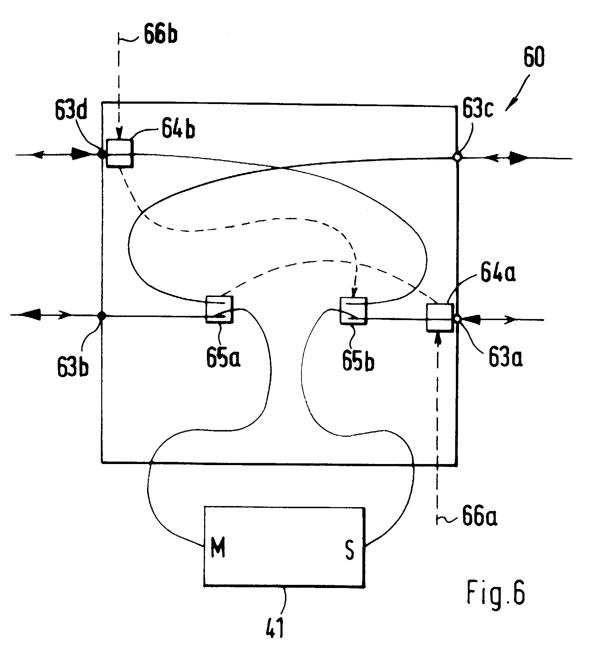

Das Übertragungsnetz 110 in Fig. 1b stellt eine Mischform der Übertragungsnetze aus den Figuren 1a und 2 dar. Das Übertragungsnetz 110 unterscheidet sich von dem Übertragungsnetz 10 dadurch, daß die Zentralstation 111 die eingespeisten Mastersignale permanent auf zwei in unterschiedliche Richtungen abgehende Übertragungsleitungen verteilt. Die Netzknoten 112a und 112c können wie der in Fig. 6 gezeigte Netzknoten 60 ausgeführt sein. Ein speziell beschalteter Netzknoten 112b, der in Fig. 1c näher dargestellt ist, detektiert beide ankommenden Mastersignale M1 und M2, reagiert im fehlerfreien Fall jedoch nur auf M1. Fällt ein Mastersignal aus, werden beide Übertragungsstrecken kurzgeschlossen und somit eine Ersatzschaltung realisiert. Der Netzknoten 112b benötigt lediglich einen einzigen Schalter 115, aber zwei Detektoren 114a, 114b, welche die Signale aus den beiden Übertragungsleitungen überwachen. Anstelle der MasterSlave-Einheit 41, wie sie in den Ausführungsbeispielen der Fign. 4 bis 7 gezeigt ist, genügt beim Netzknoten 112b eine Slaveeinheit 141, die ausschließlich Slavesignale abgibt.

Fig. 4 zeigt eine einfache Ausführungsform eines erfindungsgemäßen Netzknotens 40, der beispielsweise in die Übertragungsnetze 20 bzw. 30 der Figuren 2 oder 3 eingebaut sein könnte. Der Netzknoten 40 umfaßt eine Master-Slave-Einheit 41, die zwei Ports aufweist, von denen der mit "S" gekennzeichnete ein Mastersignal empfangen und ein Slavesignal senden und der mit "M" gekennzeichnete ein Slavesignal empfangen und ein Mastersignal senden kann. Die Master-SlaveEinheit 41 kann beispielsweise durch einen SISA-Konzentrator realisiert werden.

Weiterhin umfaßt der Netzknoten 40 einen Detektor 44, der eine erste Übertragungsleitung 43a auf eingehende Mastersignale überwacht. Bei Unterschreiten einer vorgegebenen Mastersignalhöhe oder bei Überschreiten einer vorgegebenen maximalen Mastersignal-freien Zeitdauer betätigt der Detektor 44 einen ersten Schalter 45a, welcher dann die überwachte erste Übertragungsleitung 43a mit dem Masterausgang M der Master-Slave-Einheit 41 verbindet. Außerdem betätigt der Detektor einen zweiten Schalter 45b, welcher den Slaveausgang S der Master-Slave-Einheit 41 mit einer zweiten, zum Netzknoten 40 laufenden Übertragungsleitung 43b verbindet.

Im Normalfall, wenn der Detektor Gut-Signale aus der Übertragungsleitung 43a erhält, sind die Schalter 45a, 45b in einer solchen Stellung, daß die Mastersignale aus der Übertragungsleitung 43a über den Schalter 45b in den Slaveausgang S der Master-Slave-Einheit 41 laufen, aus dem Masterausgang M wieder herauskommen und über den Schalter 45a auf die Übertragungsleitung 43b abgehen. Umgekehrt können natürlich auch Slavesignale in der entgegengesetzten Richtung dieser Leitungsführung laufen. Lediglich für den Fall, daß der Detektor 44 eine Störung der eingehenden Mastersignale auf der Übertragungsleitung 43a erkennt, wird durch die oben beschriebene Betätigung der Schalter 45a, 45b die Übertragungsleitung 43b an den Slaveausgang S der Master-Slave-Einheit 41 und die Übertragungsleitung 43a an den Masterausgang M gelegt, so daß nunmehr Mastersignale über die Übertragungsleitung 43b und die Master-Slave-Einheit 41 des Netzknotens 40 auf die Übertragungsleitung 43a gelegt werden können. Auf diese Weise können ohne größeren Schaltungsaufwand insbesondere ohne Umdefinition der Master- bzw. SlaveEigenschaften der entsprechenden Ein- bzw. Ausgänge der über die Übertragungsleitung 43a mit dem Netzknoten 40 verbundene Netzpartner sowie möglicherweise in Richtung der detektierten Störung an diesem benachbarten Netzpartner angrenzende weitere Partner mit Mastersignalen versorgt werden und in umgekehrter Richtung Slavesignale abgeben.

Eine Verbesserung des Netzknotens 40 stellt der in Fig. 5 schematisch gezeigte Netzknoten 50 dar, der neben dem Detektor 54a, welcher die Übertragungsleitung 43a auf eingehende Mastersignale überwacht, noch einen weiteren Detektor 54b enthält, welcher die Übertragungsleitung 43b auf eingehende Mastersignale überwacht. Beim Ausbleiben von Mastersignalen auf der Übertragungsleitung 43b betätigt der weitere Detektor 54b anstelle des ersten Detektors 54a den zweiten Schalter 45b. Damit kann nach Behebung einer eingetretenen Störung ein automatisches Rücksetzen der Master-Slave-Eigenschaften der ein- und ausgehenden Signale im Netzknoten 50 bewirkt werden.

Eine komfortablere Ausführungsform des erfindungsgemäßen Netzknotens ist in Fig. 6 gezeigt. Der dort dargestellte Netzknoten eignet sich insbesondere zum Einbau in Übertragungsnetze mit Doppelringstruktur, wie beispielsweise das in Fig. 1a dargestellte Übertragungsnetz 10.

Der Netzknoten 60 ist mit seinen beiden benachbarten Partnern einerseits durch Übertragungsleitungen 63a und 63c und andererseits durch Übertragungsleitungen 63b und 63d verbunden. Im Normalfall laufen nur Signale über die Übertragungsleitungen 63a und 63b, die dem äußeren Leitungsring des in Fig. 1a gezeigten Übertragungsnetzes 10 entsprechen. Falls der Detektor 64a ein ausreichendes Vorliegen von Mastersignalen aus der Übertragungsleitung 63a registriert, werden diese Mastersignale über den zweiten Schalter 65b an den Slaveausgang S der Master-Slave-Einheit 41 geleitet und gelangen aus dem Masterausgang M über den ersten Schalter 65a auf die Übertragungsleitung 63b des äußeren Ringes.

Erkennt jedoch der Detektor 63a ein Unterschreiten einer minimal zulässigen Mastersignalhöhe oder ein Überschreiten einer maximal zulässigen Zeitdauer, während der keine Mastersignale aus der Übertragungsleitung 63a ankommen, so betätigt er den ersten Schalter 65a, welcher dann die Übertragungsleitung 63c des inneren Ringes, die parallel zur Übertragungsleitung 63a verläuft und den Netzknoten 60 mit dem gleichen Partner verbindet wie die Übertragungsleitung 63a, mit dem Masterausgang M der Master-Slave-Einheit 41.

Für den Fall, daß ein zweiter Detektor 64b auf einer Übertragungsleitung 63d, die den Netzknoten 60 mit einem anderen Partner als die erste Übertragungsleitung 63a sowie die weitere Übertragungsleitung 63c verbindet, ein ausreichendes ankommendes Mastersignal detektiert, betätigt der Detektor 64b den zweiten Schalter 65b, welcher dann den Slaveausgang S der Master-Slave-Einheit 41 mit der Übertragungsleitung 63d verbindet. Auf diese Weise können von der Übertragungsleitung 63d des inneren Ringes ankommende Mastersignale durch den Netzknoten 60 auf die weitere Übertragungsleitung 63c des inneren Ringes und von dort zum nächsten Partner des Netzknotens 60 weitergeleitet werden. Umgekehrt können natürlich auch Slavesignale von diesem nächsten Partner auf der gleichen Strecke in entgegengesetzter Richtung zurückgeleitet werden. Auf diese Weise wird der Teil des Ring netzes, auf dem ein Fehler detektiert wurde, nunmehr auf dem inneren Ring mit Mastersignalen versorgt.

Nach Beheben des Fehlers kann eine automatische Rückschaltung in den Normalzustand erfolgen, in welchem die Mastersignale nur in der äußeren Ringleitung laufen, zu denen die Übertragungsleitungen 63a und 63b gehören. Dazu muß lediglich der Detektor 64b ein Ausbleiben von Mastersignalen auf der inneren Übertragungsleitung 63d erkennen und den oben beschriebenen Schaltvorgang in umgekehrter Richtung in Gang setzen.

Eine weitere Besonderheit des in Fig. 6 dargestellten Netzknoten 60 besteht darin, daß die Detektoren 64a und 64b jeweils durch Betätigungseinrichtungen 66a bzw. 66b in ihrer Ansprechempfindlichkeit beeinflußt werden können. Konkret wird dabei die minimal zulässige Mastersignalhöhe und/oder die maximal zulässige Mastersignal-freie Zeitdauer, nach der einer der Detektoren 64a, 64b anspricht, eingestellt.

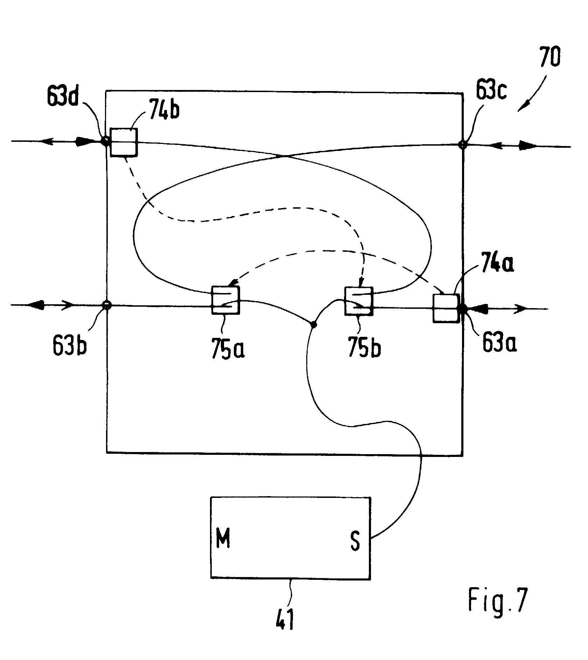

Der Netzknoten 70 in Fig. 7 stellt eine Modifikation des in Fig. 6 dargestellten Netzknoten 60 dar, bei der der Slaveausgang S der Master-Slave-Einheit 41 permanent sowohl mit dem ersten Schalter 75a als auch mit dem zweiten Schalter 75b verbunden ist. Auf diese Weise kann der Netzknoten 70 ausschließlich Slavesignale an seine Partner im Übertragungsnetz abgeben.

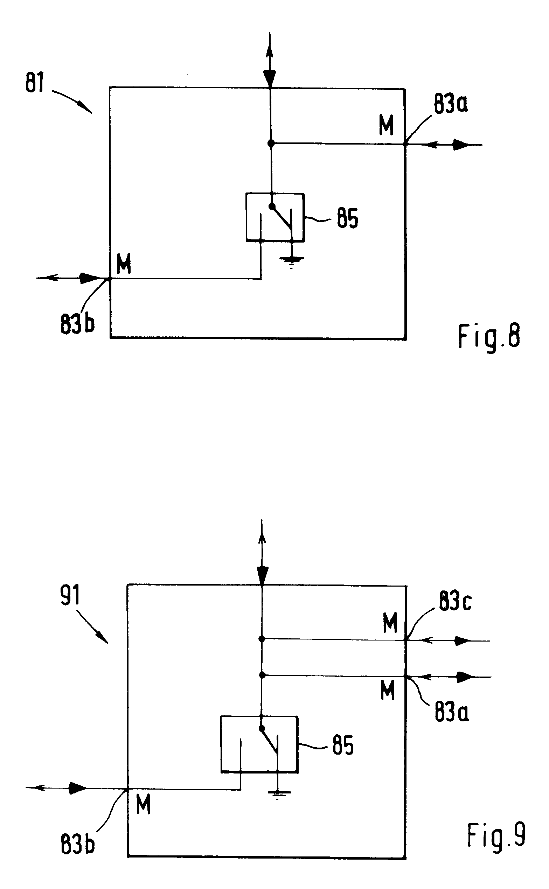

Fig. 8 zeigt eine Zentralstation 81, die sich durch besonders einfache Bauweise auszeichnet und beispielsweise in den Übertragungsnetzen 20 oder 30 der Figuren 2 bzw.3 einsetzbar ist. Die Zentralstation 81 erhält ein in der Zeichnung oben dargestelltes externes Mastersignal, welches sie auf eine Übertragungsleitung 83a an ein erfindungsgemäßes ringförmiges Übertragungsnetz weiterreicht. In der Zentralstation 81 ist ein Schalter 85 vorgesehen, der bei Meldung einer Systemstörung das in die Zentralstation 81 eingespeiste Mastersignal auf eine weitere, von der Zentralstation 81 abgehende Übertragungsleitung 83b legt. Damit kann im Störungsfalle in der oben beschriebenen Art eine vorübergehende Überbrückung der Signalunterbrechung an einer Stelle im Ring bewirkt werden. Sobald die Störung behoben ist, schaltet der Schalter 85 in eine Stellung, in der die Übertragungsleitung 83b nicht mehr mit dem eingehenden Mastersignal verbunden ist. Im Normalbetrieb kommt dann über die Übertragungsleitung 83b ein Mastersignal aus dem Ring in die Zentralstation 81 zurück, wo es entweder blind endet oder für andere Zwecke abgegriffen wird.

Die in Fig. 9 dargestellte Zentralstation 91 unterscheidet sich von der oben beschriebenen Zentralstation 81 lediglich dadurch, daß eine weitere in den Ring abgehende Übertragungsleitung 83c vorgesehen ist. Damit eignet sich die Zentralstation 91 besonders zum Einbau in Übertragungsnetze mit zusätzlichem Halbring, wie sie beispielsweise in den Figuren 2 und 3 gezeigt sind.

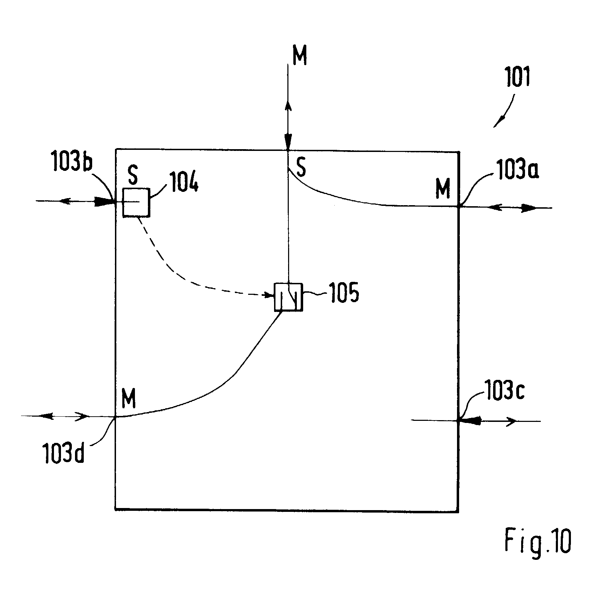

Fig. 10 schließlich stellt schematisch eine Zentralstation 101 dar, in welche insgesamt vier Übertragungsleitungen 103a bis 103d münden. Damit ist die Zentralstation 101 insbesondere zum Einbau in Übertragungsnetze mit Doppelringstruktur, wie beispielsweise das in Fig. 1 gezeigte Übertragungsnetz 10 geeignet. Dabei stellen die Übertragungsleitungen 103a und 103b Teile des äußeren Ringes und die Übertragungsleitungen 103c und 103d Teile des inneren Ringes dar. Wenn daher ein in der Zentralstation 101 vorgesehener Detektor 104 feststellt, daß aus der Übertragungsleitung 103b des äußeren Ringes kein Mastersignal zurückkommt, wird er einen Schalter 105 betätigen, der das extern ankommende Mastersignal auf die Übertragungsleitung 103d des inneren Ringes legt, um bis zur Behebung der festgestellten Störung einen Ersatzpfad für die Signalübertragung auf dem inneren Ring zu eröffnen.

## Patentansprüche

1. Übertragungsnetz zum bidirektionalen Transport von Daten auf Übertragungsleitungen zu mehreren Netzknoten mit einer Zentralstation, die ein Mastersignal empfängt und auf mindestens eine Übertragungsleitung weiterleitet, wobei auf der mindestens einen Übertragungsleitung auch Slavesignale von mindestens einem Netzknoten zur Zentralstation zurückgeleitet werden können,
**dadurch gekennzeichnet,**
daß die Netzknoten (12a, 12b, 12c; 22a bis 22f; 32b, 32d, 32e, 32f; 40; 50; 60; 70) in einer Ringstruktur durch Übertragungsleitungen (43a, 43b; 63a bis 63d; 83a, 83b, 83c; 103a bis 103d) miteinander verbunden sind, wobei der Ring in der Zentralstation (11; 21; 31; 81; 91; 101) geschlossen ist, und daß jeder Netzknoten (12a bis 12c; 22a bis 22f; 32b, 32d, 32e, 32f; 40; 50; 60; 70) eine Master-Slave-Einheit (41), mindestens einen Detektor (44; 54a, 54b; 64a, 64b; 74a, 74b) und mindestens einen ersten und einen zweiten Schalter (45a, 45b; 65a, 65b; 75a, 75b) umfaßt, wobei die Master-Slave-Einheit (41) zwei Ports aufweist, von denen der eine Mastersignale empfangen und Slavesignale senden und der andere Slavesignale empfangen und Mastersignale senden kann, wobei der Detektor (44; 54a; 64a; 74a) vom zugehörigen Netzknoten (40; 50; 60; 70) über eine erste Übertragungsleitung (43a; 63a) empfangene Mastersignale überwacht und bei Unterschreiten einer vorgegebenen minimalen Mastersignalhöhe oder bei Überschreiten einer vorgegebenen maximalen Mastersignal-freien Zeitdauer den ersten Schalter (45a; 65a; 75a) betätigt, welcher entweder die überwachte erste Übertragungsleitung (43a) oder eine weitere Übertragungsleitung (63c), die parallel zur ersten Übertragungsleitung (63a) verläuft und den Netzknoten (60; 70) mit demselben Partner verbindet, wie die erste Übertragungsleitung (63a), mit dem Masterausgang der Master-Slave-Einheit (41) verbindet, und wobei der Detektor (54b; 64b; 74b) den zweiten Schalter (45b; 65b; 75b) betätigt, welcher den Slaveausgang der Master-Slave-Einheit (41) mit einer zweiten, zum zugehörigen Netzknoten (40; 50; 60; 70) laufenden Übertragungsleitung (43b; 63d) verbindet, die den Netzknoten (40; 50; 60; 70) mit einem anderen Partner verbindet als die erste Übertragungsleitung (43a; 63a).

2. Übertragungsnetz nach Anspruch 1, dadurch gekennzeichnet, daß in mindestens einem Netzknoten (50; 60; 70) ein weiterer Detektor (54b; 64b; 74b) vorgesehen ist, der die zweite Übertragungsleitung (43b; 63d) auf eingehende Mastersignale überwacht, und der anstelle des ersten Detektors (54a; 64a; 74a) bei einem Ausbleiben der Mastersignale den zweiten Schalter (45b; 65b; 75b) betätigt.

3. Übertragungsnetz nach einem der Ansprüche 1 oder 2, dadurch gekennzeichnet, daß bei mindestens einem Netzknoten (70) der erste Schalter (75a) permanent mit dem Slaveausgang der Master-Slave-Einheit (41) verbunden ist und im Falle einer Störungsdetektion nicht mit dem Masterausgang der Master-Slave-Einheit (41) verbunden wird.

4. Übertragungsnetz nach einem der vorhergehenden Ansprüche, dadurch gekennzeichnet, daß in der Zentralstation (81; 91; 101) ein Schalter (85; 105) vorgesehen ist, der bei Meldung einer Systemstörung das in die Zentralstation (81; 91; 101) eingespeiste Mastersignal auf eine weitere, von der Zentralstation (81; 91; 101) abgehende Übertragungsleitung (83b; 103d) legt.

5. Übertragungsnetz nach Anspruch 4, dadurch gekennzeichnet, daß in der Zentralstation (101) ein Detektor (104) vorgesehen ist, der eine von mindestens einem Netzknoten ankommende Übertragungsleitung (103b) auf das Vorliegen von Mastersignalen überwacht und im Falle einer detektierten Störung den Schalter (105) in der Zentralstation (101) betätigt.

6. Übertragungsnetz nach einem der vorhergehenden Ansprüche, dadurch gekennzeichnet, daß ein weiterer Halbring vorgesehen ist, der mittels einer weiteren, von der Zentralstation (21; 91) ausgehenden Übertragungsleitung (83c) einen oder mehrere weitere Netzknoten (22d, 22e, 22f) mit Mastersignalen beschickt, wobei der letzte Netzknoten (22f) im Halbring mittels einer Übertragungsleitung entweder mit einem Netzknoten (22b) in der Ringstruktur oder mit der Zentralstation verbunden ist.

7. Übertragungsnetz nach einem der vorhergehenden Ansprüche, dadurch gekennzeichnet, daß in der Ringstruktur die Zentralstation (11; 101) mit den benachbarten Netzknoten (12a, 12c) und die Netzknoten (12a, 12b, 12c) untereinander jeweils durch zwei parallele Übertragungsleitungen (103a, 103c bzw. 103b, 103d) miteinander verbunden sind.

8. Übertragungsnetz nach einem der vorhergehenden Ansprüche, dadurch gekennzeichnet, daß von mindestens einem Netzknoten (32b) mittels einer Übertragungsleitung (33) eine weitere Zentralstation (31) mit Mastersignalen versorgt wird, wobei die weitere Zentralstation (31) den Ausgangspunkt für eine weitere Ringstruktur von Übertragungsleitungen und weitere Netzknoten (32d, 32e, 32f) bildet.

9. Übertragungsnetz nach einem der vorhergehenden Ansprüche, dadurch gekennzeichnet, daß bei zumindest einem der Netzknoten (60) die vorgebbare minimale Mastersignalhöhe und/oder die vorgebbare maximale Mastersignal-freie Zeitdauer, nach der mindestens einer der Detektoren (64a, 64b) anspricht, einstellbar ist.

10. Netzknoten zum Einbau in ein Übertragungsnetz zum bidirektionalen Transport von Daten, in den mindestens zwei Datenübertragungsleitungen münden, die den Netzknoten entweder mit einer Zentralstation oder einem weiteren Netzknoten verbinden,
dadurch gekennzeichnet,
daß der Netzknoten (40; 50; 60; 70) eine Master-SlaveEinheit (41) umfaßt, die zwei Ports aufweist, von denen der eine Mastersignale empfangen und Slave-Signale senden und der andere Slave-Signale empfangen und Mastersignale senden kann, und daß der Netzknoten (40; 50; 60; 70) mindestens einen Detektor (44; 54a, 54b; 64a, 64b; 74a, 74b) und mindestens einen ersten und einen zweiten Schalter (45a, 45b; 65a, 65b; 75a, 75b) umfaßt, wobei der Detektor (44; 54a; 64a; 74a) über eine erste Übertragungsleitung (43a; 63a) empfangene Mastersignale überwacht und bei Unterschreiten einer vorgegebenen minimalen Mastersignalhöhe oder bei Überschreiten einer vorgegebenen maximalen Mastersignal freien Zeitdauer den ersten Schalter (45a; 65a; 75a) betätigt, welcher die vom Detektor (44; 54a) überwachte erste Übertragungsleitung (43a) oder eine weitere Übertragungsleitung (63c), die parallel zur ersten Übertragungsleitung (63a) verläuft und den Netzknoten (60; 70) mit demselben Partner verbindet, wie die erste Übertragungsleitung (63a), mit dem Masterausgang der Master-Slave-Einheit (41) verbindet, und wobei der Detektor (54b; 64b; 74b) den zweiten Schalter (45b; 65b; 75b) betätigt, welcher den Slaveausgang der Master-Slave-Einheit (41) mit einer zweiten zum Netzknoten (40; 50; 60; 70) laufenden Übertragungsleitung (43b; 63d) verbindet, die den Netzknoten (40; 50; 60; 70) mit einem anderen Partner verbindet als die erste Übertragungsleitung (43a; 63a).

11. Netzknoten nach Anspruch 10, dadurch gekennzeichnet, daß ein weiterer Detektor (54b; 64b; 74b) vorgesehen ist, der die zweite Übertragungsleitung (43b; 63d) auf eingehende Mastersignale überwacht, und der anstelle des ersten Detektors (54a; 64a; 74a) bei einem Ausbleiben der Mastersignale den zweiten Schalter (45b; 65b; 75b) betätigt.

12. Netzknoten nach einem der Ansprüche 10 oder 11, dadurch gekennzeichnet, daß der erste Schalter (75a) permanent mit dem Slaveausgang der Master-Slave-Einheit (41) verbunden ist und im Falle einer Störungsdetektion nicht mit dem Masterausgang der MasterSlave-Einheit (41) verbunden wird.

13. Netzknoten zum Einbau in ein Übertragungsnetz zum bidirektionalen Transport von Daten, in den mindestens zwei Datenübertragungsleitungen münden, die den Netzknoten entweder mit einer Zentralstation oder einem weiteren Netzknoten verbinden,
dadurch gekennzeichnet,
daß der Netzknoten (110) eine Slave-Einheit (141) umfaßt, die einen Port aufweist, der Slave-Signale senden kann, und daß der Netzknoten (110) mindestens zwei Detektoren (114a, 114b) und mindestens einen Schalter (115) umfaßt, wobei der erste Detektor (114a) über eine erste Übertragungsleitung (113a) empfangene Mastersignale überwacht und bei Unterschreiten einer vorgegebenen minimalen Mastersignalhöhe oder bei Überschreiten einer vorgegebenen maximalen Mastersignal freien Zeitdauer den Schalter (115) betätigt, welcher die vom ersten Detektor (114a) überwachte erste Übertragungsleitung (113a) mit einer zweiten Übertragungsleitung 113b verbindet, und wobei der zweite Detektor (114b), der über die zweite Übertragungsleitung (113b) empfangene Mastersignale überwacht, bei Unterschreiten einer vorgegebenen minimalen Signalhöhe oder bei Überschreiten einer vorgegebenen maximalen Mastersignal-freien Zeitdauer ebenfalls den Schalter (115) schließt.
